(19) Europäisches Patentamt
European Patent Office
Office européen des brevets

(11) **EP 4 049 864 B1**

(12) **EUROPEAN PATENT SPECIFICATION**

(45) Date of publication and mention
of the grant of the patent:
**04.06.2025 Bulletin 2025/23**

(21) Application number: **20878250.8**

(22) Date of filing: **19.10.2020**

(51) International Patent Classification (IPC):
*B60C 11/24* (2006.01)   *B60C 23/06* (2006.01)
*B60C 23/04* (2006.01)   *B60C 19/00* (2006.01)
*G01M 17/02* (2006.01)

(52) Cooperative Patent Classification (CPC):
**B60C 11/246; B60C 11/243; B60C 23/0486;
B60C 23/064; G01M 17/02;** B60C 2019/004

(86) International application number:
**PCT/JP2020/039204**

(87) International publication number:
**WO 2021/079838 (29.04.2021 Gazette 2021/17)**

(54) **TIRE WEAR AMOUNT ESTIMATION SYSTEM, TIRE WEAR AMOUNT ESTIMATION PROGRAM, AND TIRE WEAR AMOUNT ESTIMATION METHOD**

SYSTEM ZUR SCHÄTZUNG DER REIFENVERSCHLEISSMENGE, PROGRAMM ZUR SCHÄTZUNG DER REIFENVERSCHLEISSMENGE UND VERFAHREN ZUR SCHÄTZUNG DER REIFENVERSCHLEISSMENGE

SYSTÈME D'ESTIMATION DE QUANTITÉ D'USURE DE PNEU, PROGRAMME D'ESTIMATION DE QUANTITÉ D'USURE DE PNEU ET PROCÉDÉ D'ESTIMATION DE QUANTITÉ D'USURE DE PNEU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.10.2019 JP 2019191796**

(43) Date of publication of application:
**31.08.2022 Bulletin 2022/35**

(73) Proprietor: **BRIDGESTONE CORPORATION
Chuo-ku
Tokyo 104-8340 (JP)**

(72) Inventors:
• **ISHIZUKI Masamu**
**Chuo-ku, Tokyo 104-8340 (JP)**
• **NISHIYAMA Kenta**
**Chuo-ku, Tokyo 104-8340 (JP)**

(74) Representative: **Marks & Clerk LLP
15 Fetter Lane
London EC4A 1BW (GB)**

(56) References cited:
WO-A1-2009/008502        JP-A- 2006 160 159
JP-A- 2007 153 034        JP-A- 2009 019 950
JP-A- 2009 061 917        US-A- 5 749 984
US-A1- 2010 186 492

# Description

[Technical Field]

The present invention relates to a tire wear amount estimation system, a tire wear amount estimation program and a tire wear amount estimation method for estimating a wear state of a tread portion of a tire.

[Background Art]

Conventionally, a technique has been known in which an acceleration sensor mounted on inside surface of a pneumatic tire (tire) assembled to a rim wheel is used to detect acceleration (i.e., equivalent to centrifugal force) of tire radial direction, and the wear amount of the tire, specifically, the tread portion is estimated based on a time series waveform of the detected acceleration and a waveform obtained by differentiating the time series waveform. This technology focuses on the fact that the deformation speed of the tread portion at the time of ground contact changes as the tread portion wears.

US2010186492A1 discloses an acceleration sensor installed on the inner surface in the inner liner region of a tire to detect the acceleration of the tread in the radial direction of the tire. The peak level on the leading edge side or the trailing edge side of the tread appearing in the differentiated waveform of the detected acceleration is calculated and used as an index of deformation speed of the tread. The degree of wear of the tire is estimated on the basis of the calculated index of deformation speed and an M-V map showing a predetermined relationship between the degree of tire wear and the index of deformation speed.

JP2009061917A discloses an acceleration sensor provided on an inner surface side of an inner liner part of the tire. Acceleration of tread in the tire radial direction is detected to calculate and its differential waveform, and a grounding time t which is an interval between two peaks appearing in this differential wave form is calculated. A period of one peak is calculated as a rotation time, and a velocity of a tire is calculated from the rotation time T.

JP2009019950A discloses an acceleration sensor provided on the inner surface side of an inner liner part of the tire, and an acceleration waveform in the tire diameter direction of a tire tread is detected, and a deformation time being a time between two peaks corresponding to a swelling point appearing in the acceleration waveform is calculated. A deformation length which is an index of a grounding out-of-plane deformation range of the tire is calculated, and a grounding time which is a time between two peaks corresponding to the ground contact end of the tread appearing in a differential waveform which is a time-series waveform of a differentiated value of the acceleration is calculated, and a grounding length which is an index of a deflection amount of the tire is calculated. The abrasion degree of the tire is estimated based on the calculated deformation length and grounding length and a map showing a relation between the deformation length corresponding to the abrasion degree of the tire and the grounding length, determined beforehand.

US5749984A discloses a method and system for monitoring and measuring the amount of deflection of a pneumatic tire wherein said monitoring system in the tire detects tire sidewall deflection by measuring the length of the tire contact patch area relative to the total circumference of the tire. The embedded sensor device generates a signal which varies as it passes through the tire contact patch within the tire on a moving vehicle. If the vehicle is moving at a constant speed, the ratio of time which the sensor spends inside the contact patch to the time the sensor spends outside the contact patch is proportional to tire deflection. Sensor electrical signals are digitized and counted to determine deflection, tire speed and the number of tire revolutions to improve performance of both the tire and the vehicle.

JP2007153034 discloses a judging part of the tire abrasion state judging device provides actual acceleration generated in the tire circumferential direction by an acceleration sensor when a rotating tire grounds. Additionally, it provides abrasion causing threshold value to be a standard for abrasion judgement set against standard acceleration generated in the tire circumferential direction from a memory part when the tire in a non-abrasion state grounds. The abrasion state of the tire is judged by comparing the detected actual acceleration and the abrasion causing

threshold value with each other in accordance with at least either one of size of an output value of the acceleration, changing gradient of the output value and a peak interval in acceleration increase.

[Citation List]

[Patent Literature]

[Patent Literature 1]
Japanese Patent Application Laid-Open No. 2016 -190615

[Summary of Invention]

Since the above-described technique for estimating the amount of wear of a tire uses acceleration in tire radial direction, there is a problem that the estimation accuracy deteriorates when a vehicle equipped with a tire mainly travels at a low speed (For example, about 40 km/h).

Specifically, at low speed, the acceleration (centrifugal force) of tire radial direction decreases, and the signal-to-noise ratio (S/N) deteriorates. Therefore, it becomes difficult to accurately detect the change of the deformation speed of the tread portion, and the estimation accuracy of the wear amount decreases.

Therefore, the present invention has been made in view of such a situation, and it is an object of the present invention to provide a tire wear amount estimation system, a tire wear amount estimation program, and a tire wear amount estimation method, which can achieve a high estimation accuracy of a wear amount even when traveling mainly at a low speed.

According to a first aspect of the invention there is provided a tire wear amount estimation system as recited in claim 1.

According to a second aspect of the invention there is provided a tire wear amount estimation program as recited in claim 5.

According to a third aspect of the invention there is provided a tire wear amount estimation method as recited in claim 6.

[Brief Description of Drawings]

FIG. 1 is an overall schematic diagram of a tire wear estimation system 100.
FIG. 2 is a functional block diagram of the tire wear estimation system 100.
FIG. 3 shows the pneumatic tire 10 provided with a strain sensor 115 and an example of output of a strain signal by the strain sensor 115.
FIG. 4 shows an output example of a strain signal when the pneumatic tire 10 is new.
FIG. 5 shows an output example of a strain signal when the pneumatic tire 10 is worn.
FIG. 6 shows estimation operation flow of the wear amount of the pneumatic tire 10 (tread portion 20) by the tire wear amount estimation system 100.
FIG. 7 is an overall schematic diagram of the tire wear amount estimation system 100 according to modified example.

[Modes for Carrying out the Invention]

Embodiments will be described below with reference to the drawings. It should be noted that the same functions and configurations are denoted by the same or similar reference numerals, and the description thereof is appropriately omitted.

(1)Overall outline of tire wear estimation system

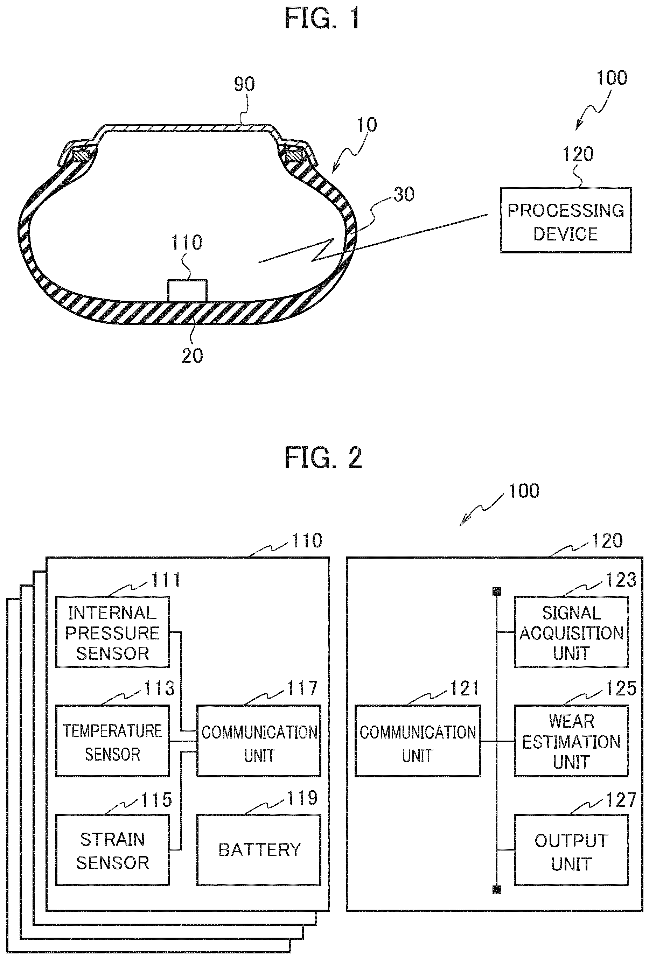

FIG. 1 is an overall schematic configuration diagram of a tire wear amount estimation system 100 according to an embodiment. As shown in FIG. 1, the tire wear amount estimation system 100 includes a sensor unit 110 and a processing device 120.

The sensor unit 110 is provided in inside of a tread portion 20 of the pneumatic tire 10.

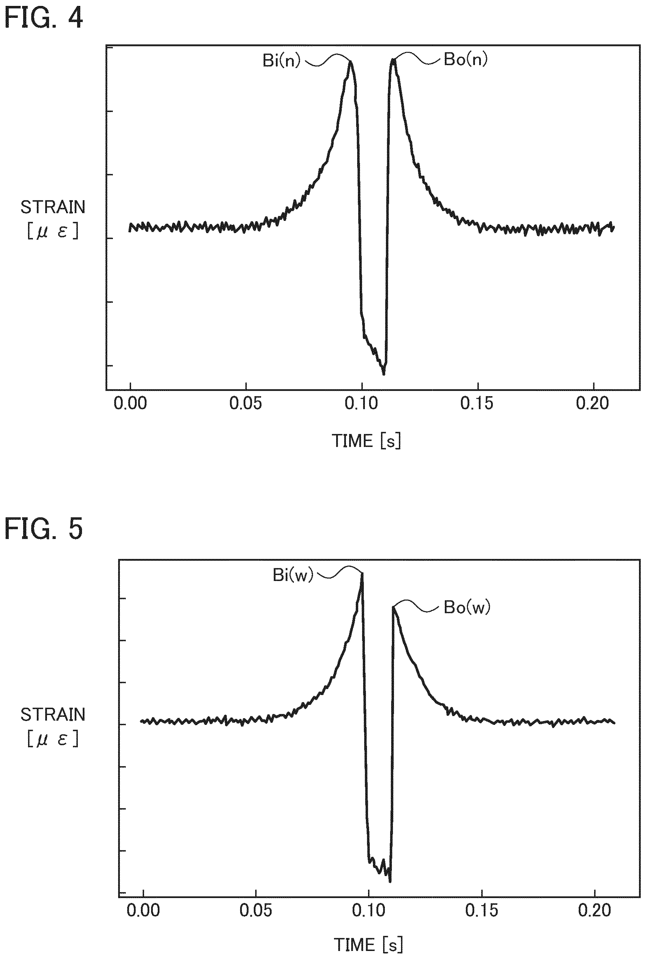

FIG. 1 shows a cross-sectional shape of the pneumatic tire 10 assembled to a rim wheel 90 along a tire width direction. The tread portion 20 is a part in contact with the road surface R when the pneumatic tire 10 mounted on the vehicle (not shown) rolls on the road surface R (Not shown in FIG. 1, see FIG. 4), and a tread pattern corresponding to the type of the vehicle and required performance is formed on the tread portion 20.

Although only one pneumatic tire 10 is shown in FIG. 1, the sensor unit 110 is preferably provided on each pneumatic tire mounted on the vehicle. However, the sensor unit 110 may not necessarily be provided in all pneumatic tires mounted on the vehicle.

In this embodiment, the sensor unit 110 is provided on inside surface of the pneumatic tire 10. Specifically, the sensor unit 110 is attached to a surface of an inner liner (not shown) for preventing leakage of a gas such as air filled in an internal space of the pneumatic tire 10 assembled to the rim wheel 90.

The sensor unit 110 is not necessarily provided on inside surface of the pneumatic tire 10. For example, some or all of the sensor unit 110 may be embedded within the pneumatic tire 10.

In the present embodiment, the sensor unit 110 is provided at the center of the tread portion 20 in the tire width direction. The sensor unit 110 may be provided at a place other than the tread portion 20, for example, the tire side portion 30. In the present embodiment, one sensor unit 110 is provided in the tire circumferential direction, but a plurality of sensor units 110 may be provided in the tire circumferential direction.

As will be described later, the sensor unit 110 includes various sensors including a strain sensor, a battery, a wireless communication function, and the like.

The processing device 120 realizes wireless communication with the sensor unit 110 and acquires a signal output from the sensor unit 110. The processing device 120 is implemented by hardware such as a communication module including a processor, memory, and antenna.

The processing device 120 is usually provided in a vehicle to which the pneumatic tire 10 is mounted. In this case, the processing device 120 may be implemented by an electronic control unit (ECU) mounted on the vehicle. Alternatively, the processing device 120 may be implemented not on a vehicle but on a server computer (which may be referred to as a network cloud) connected via a wireless communication network.

(2)Function block configuration of tire wear amount estimation system

FIG. 2 is a functional block diagram of the tire wear amount estimation system 100. Specifically, FIG. 2 is a functional block diagram of the sensor unit 110 and the processing device 120.

(2.1) Sensor Unit 110

As shown in FIG. 2, the sensor unit 110 includes an internal pressure sensor 111, a temperature sensor 113, a strain sensor 115, and a communication unit 117.

The internal pressure sensor 111 detects the internal pressure (air pressure) of the pneumatic tire 10 assembled to the rim wheel 90. The temperature sensor 113 detects the temperature of the inner surface of the tread portion 20.

The sensor unit 110 may not include the internal pressure sensor 111 and the temperature sensor 113. Alternatively, the sensor unit 110 may include an acceleration sensor.

The strain sensor 115 detects strain generated in the tread portion 20. Specifically, the strain sensor 115 detects strain in the tire circumferential direction.

As described above, the sensor unit 110 is provided on inside surface of the pneumatic tire 10, more specifically, the tread portion 20 (or inside the pneumatic tire 10), and the strain sensor 115 is also provided on inside surface of the tread portion 20 (or inside the pneumatic tire 10).

Specifically, the strain sensor 115 can detect the amount of strain (bending moment) generated when the tread portion 20 contacts the road surface R.

When the pneumatic tire 10 rolls and comes into contact with the road surface R, the arcuate tread portion 20 in the tire side view is deformed substantially linearly by the load. Specifically, focusing on the position of the specific tread portion 20 in the tire circumferential direction, bending deformation occurs in the tread portion 20 at the timing of stepping on the road surface R, and the tread portion deforms substantially linearly in the state of contact with the road surface R. In addition, bending deformation occurs again at the timing of kicking out from the road surface R, and thereafter, the shape returns to the original arc shape.

That is, the stepping of the tread portion 20 onto the road surface R may be interpreted as a timing at which the predetermined position of the tread portion 20 in the tire circumferential direction is brought into contact with the road surface R by the rolling motion of the tread portion 20. The kicking out of the tread portion 20 from the road surface R may be interpreted as a timing at which the predetermined position of the tread portion 20 in the tire circumferential direction is separated from the road surface R by the rolling motion of the tread portion 20.

In the present embodiment, the strain detected by the strain sensor 115 may correspond to the deformation amount $\Delta l$ when the load is applied divided by the original length $l$ ($\Delta l/l$) as generally interpreted. In practice, the strain sensor 115 can output a voltage (unit: mV) corresponding to the microstrain ($\mu\varepsilon$).

The amount of strain detected by the strain sensor 115 may be interpreted as a bend amount. The strain sensor 115 may be, for example, a piezoelectric sensor, but may be referred to as a strain sensor or a strain gauge. The number of elements constituting the strain sensor (gauge) and the gauge length are not particularly limited.

The communication unit 117 executes wireless (radio) communication with the processing device 120. The wireless communication system of the communication unit 117 is not particularly limited. For example, as a communication scheme, a method using a frequency (such as UHF) used in a tire pressure monitoring system (TPMS) or the like, or a method in accordance with a short-range wireless communication standard can be mentioned.

The communication unit 117 modulates the signals (voltage, etc.) output from the internal pressure sensor 111, the temperature sensor 113, and the strain sensor 115 according to a predetermined modulation scheme, and transmits the modulated signals to the processing device 120 via radio signals. The communication unit 117 may also transmit control data or the like transmitted from the processing device 120 via a radio signal to the internal pressure sensor 111, the temperature sensor 113, and the strain sensor 115 as necessary.

The battery 119 supplies power necessary for the operation of the internal pressure sensor 111, the temperature sensor 113 and the strain sensor 115. More specifically, although the type of the battery 119 is not particularly limited, it is preferable that the sensor unit 110 is constituted by a primary battery or the like capable of being continuously driven for a long period of time (For example, one year or more).

(2.2) Processing device 120

As shown in FIG. 2, the processing device 120 includes a communication unit 121, a signal acquisition unit 123, a wear estimation unit 125, and an output unit 127.

The communication unit 121 executes wireless communication with the sensor unit 110. Similar to the communication unit 117, the wireless communication system of the communication unit 121 is not particularly limited. Further, the communication unit 121 can perform communication with a control device such as an ECU of the vehicle to which the pneumatic tire 10 is mounted or with the outside of the vehicle via a wireless communication network.

The signal acquisition unit 123 acquires a signal output from a sensor group constituting the sensor unit 110. Specifically, the signal acquisition unit 123 acquires signals output from the internal pressure sensor 111, the temperature sensor 113, and the strain sensor 115.

In particular, the signal acquisition unit 123 acquires a strain signal output from the strain sensor 115. The signal acquisition unit 123 constitutes a strain signal acquisition unit.

Specifically, the signal acquisition unit 123 acquires a voltage value corresponding to the microstrain ($\mu\varepsilon$) detected by the strain sensor 115 as a strain signal. The signal acquisition unit 123 may directly acquire $\mu\varepsilon$ as a strain signal if possible, such as when the strain sensor 115 or the communication unit 117 supports output of $\mu\varepsilon$.

The wear estimation unit 125 estimates the wear state of the tread portion 20 using the strain signal ($\mu\varepsilon$) acquired by the signal acquisition unit 123. The wear state of the tread portion 20 estimated by the wear estimation unit 125 typically includes a wear amount (unit: mm) of the tread portion 20, but may also include a residual amount (residual groove amount) of a groove portion formed on the tread portion 20, a wear rate based on the pneumatic tire 10 when new (start of use), and the like. Alternatively, it may be an estimated travel distance (or time) until the pneumatic tire 10 reaches its use limit due to wear.

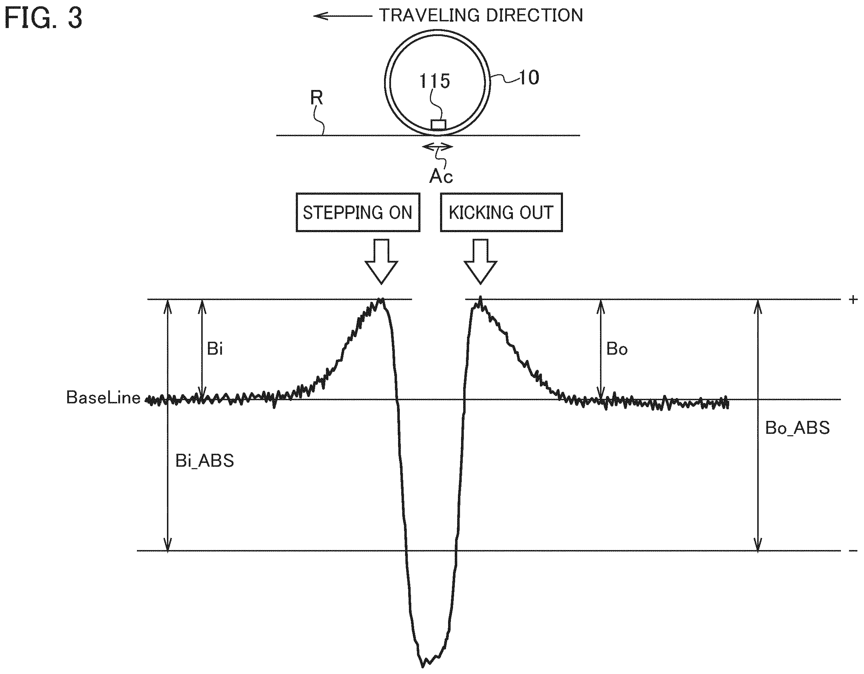

The wear estimation unit 125 estimates the wear state of the tread portion 20 based on the strain signal (Bo) output at the timing of kicking out from the road surface R of the ground contact area Ac (see FIG. 3) of the tread portion 20 corresponding to the strain sensor 115 and the reference value of the strain signal.

Specifically, the wear estimation unit 125 uses the strain signal (Bi) output at the timing of stepping on the road surface of the ground contact area Ac as the reference value.

The start time of estimating the wear state of the tread portion 20 is typically when the pneumatic tire 10 is new, but the start time of estimating the wear state of the tread portion 20 may also be used for the pneumatic tire 10 which has been used over a certain distance and the wear of the tread portion 20 has progressed to a certain extent.

The wear estimation unit 125 can determine the estimated wear amount of the tread portion 20 based on the difference between the strain signal (Bo (w)) output at the timing of kicking out of the ground contact area Ac from the road surface R and the reference value, or the ratio between Bo (w) and the reference value.

Thus, the wear estimation unit 125 determines the estimated wear amount of the tread portion 20 based on the difference between Bo (w) and the reference value.

The wear estimation unit 125 determines the estimated wear amount of the tread portion 20 by associating the difference or the ratio with the wear amount (or the residual groove amount).

The wear estimation unit 125 may adjust the estimated wear amount of the tread portion 20 using the ratio between the value of the strain signal (Bo (n)) when the pneumatic tire 10 is new and the above-mentioned reference value.

For example, the wear estimation unit 125 adjusts the ratio of Bo (n) to Bi (n) based on the value of the strain signal when the pneumatic tire 10 is new. Specifically, the wear estimation unit 125 adjusts the value of Bo (n)/Bi (n) based on the strain signal when the pneumatic tire 10 is new to "1" even when the value is other than "1" (such processing is called "offset processing").

In practice, the wear estimation unit 125 adjusts all the values of Bo (n)/Bi (n) to "1" based on the number of sensor units 110 that perform communication with the processing device 120, that is, the strain signals in the new state of tire corresponding to the number of pneumatic tires 10 mounted on the vehicle.

The wear estimation unit 125 determines an estimated wear amount of the tread portion 20 on the basis of the ratio when the pneumatic tire 10 is new and the ratio when the pneumatic tire 10 is used for traveling a certain distance and worn.

A specific example of the offset processing when the pneumatic tire 10 is new will be described later.

The wear estimation unit 125 may perform machine learning using the time-series waveform of the strain signal acquired by the signal acquisition unit 123. Specifically, the wear estimation unit 125 can create a wear estimation model by executing machine learning with the wear amount as an object variable using the feature amount relating to the peak value of the strain signal.

The characteristic quantity relating to the peak value of the strain signal includes, for example, a ratio or difference between the peak value of the strain signal at the stepping timing and the kicking timing of the pneumatic tire 10, or a ratio or difference between the peak value of the strain signal at the kicking timing when the pneumatic tire 10 is new and when the wear is estimated. That is, the wear estimation unit 125 can execute machine learning by using "the amount of wear of the tread portion 20" as an objective variable and "an index value related to the size of the peak on the kick out side of the time-series waveform of the strain signal" as an explanatory variable. The index value may be any value (ratio or difference) related to the peak of the strain signal ($\mu\varepsilon$) output at the timing of kicking out related to the reference value.

The feature amount may be estimated based on one time (one revolution) of time series waveforms, or the accuracy of estimating the wear state of the tread portion 20 may be enhanced by applying statistical methods such as average, median, and outlier processing based on a plurality of times of time series waveforms. Since the feature amount can vary depending on the type (Internal structure, tread pattern, etc.) of the pneumatic tire 10 and the tire size, it is preferable that the machine learning is executed for each type and tire size. By advancing such machine learning, it is possible to estimate the wear state of the tread portion 20 with high accuracy, for example, even in the case of a new tire size which has never been obtained before.

Further, since the index value (feature value) can vary depending on load, speed, temperature, internal pressure, and the like, the wear estimation unit 125 may increase the accuracy of estimating the wear state of the tread portion 20 by combining a signal output from the internal pressure sensor 111 or the temperature sensor 113 (or an acceleration sensor) with a strain signal.

The wear estimation unit 125 may supplement or substitute the estimation of the wear state described above by using a learning model (wear estimation model) obtained by executing machine learning.

The output unit 127 outputs information on the wear state of the tread portion 20 estimated by the wear estimation unit 125. More specifically, the output unit 127 can output the amount of wear of the tread portion 20, the amount of remaining grooves, the wear rate of the pneumatic tire 10 relative to the new one, and the running distance (or time) until the use limit is reached.

For example, the output unit 127 may display a warning (alert) on a display device provided in the vehicle indicating that the amount of wear (or the rate of wear) has exceeded a threshold, or that the amount of remaining grooves and the travel distance (or time) have fallen below the threshold, or may notify the warning by a voice guidance and/or an alarm sound.

The output unit 127 may display or report information or a warning about the internal pressure or temperature based on signals from the internal pressure sensor 111 and the temperature sensor 113.

(3)Operation of tire wear estimation system

Next, the operation of the tire wear amount estimation system 100 will be described. Specifically, the operation of estimating the wear amount of the tread portion 20 by the tire wear amount estimation system 100 will be described.

(3.1) Output Examples of Strain Signals

FIG. 3 shows the pneumatic tire 10 provided with the strain sensor 115 and an example of output of a strain signal by the strain sensor 115. Specifically, FIG. 3 shows an example of a time-series waveform of microstrain ($\mu\varepsilon$) detected by the strain sensor 115 provided on inside surface of the pneumatic tire 10 (tread portion 20).

As shown in FIG. 3, when the pneumatic tire 10 rolls along the road surface R in the traveling direction, the ground contact area Ac of the tread portion 20 where the strain sensor 115 is installed also comes into contact with the road surface R.

A ground contact area Ac which is a part of inside surface of the tread portion 20 receives compressive stress at the stepping timing to the road surface R. As a result, Bi, which is a strain in the compression direction ("+ " direction in the figure), is generated in the ground contact area Ac. In the present embodiment, the strain sensor 115 detects strain in the tire circumferential direction.

Thereafter, when the area of the tread portion 20 facing the ground contact area Ac contacts the road surface R, the ground contact area Ac receives tensile stress. As a result, strain occurs in the tensile direction ("-" direction in the figure) in the ground contact area Ac. Thereafter, Bo, which is a strain in the compression direction, is generated again in the ground contact area Ac at the kicking timing from the road surface R.

As described above, the strain at the stepping timing is expressed as Bi, and the strain at the kicking timing is expressed as Bo. The strain of the pneumatic tire 10 when it is new is referred to as Bo (n) and Bi (n), and the strain of the pneumatic tire 10 at an arbitrary time point in the use process (That is, when the wear state is estimated,) is referred to as Bo (w) and Bi (w).

FIG. 4 shows an output example of a strain signal when the pneumatic tire 10 is new. FIG. 5 shows an output example of a strain signal when the pneumatic tire 10 is worn.

As shown in FIG. 4, the values ($\mu\varepsilon$) of Bi (n) and Bo (n) when the pneumatic tire 10 is new are approximately the same.

As shown in FIG. 5, the value of Bi (w) after the pneumatic tire 10 is worn is not significantly different from the value of Bi (n). On the other hand, the value of Bo (w) is clearly smaller than the value of Bo (n).

The wear amount estimation system 100 estimates the wear state of the tread portion 20 by utilizing such a feature that the peak value of the strain (Bo (w)) at the kicking out timing of inside surface of the tread portion 20 decreases by wear progress.

(3.2) Estimated Operation Flow of Wear Amount

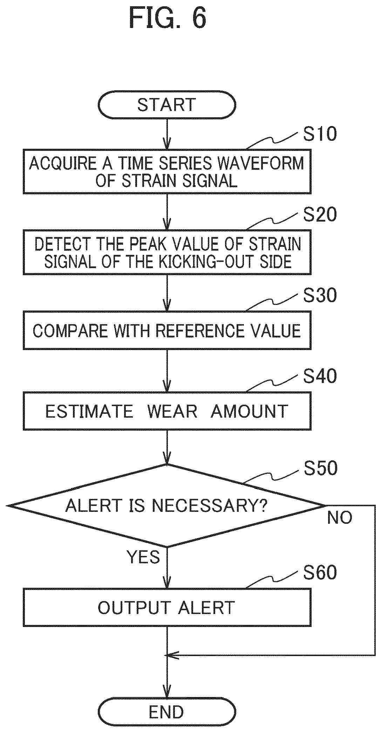

FIG. 6 shows an estimation operation flow of the wear amount of the pneumatic tire 10 (tread portion 20) by the tire wear amount estimation system 100.

As shown in FIG. 6, the tire wear amount estimation system 100, in this embodiment, the processing device 120 acquires a time series waveform of the strain signal ($\mu\varepsilon$) (S 10). More specifically, the processing device 120 acquires time series waveforms ($\mu\varepsilon$) as shown in FIG. 5.

As described above, in the present embodiment, only one sensor unit 110 is provided in the tire circumferential direction, and the processing device 120 acquires time-series waveforms having peak values (Bi, Bo) of strain signals of the stepping timing and the kicking timing as shown in FIG. 5 for each rotation of the pneumatic tire 10.

The processing device 120 may acquire one time-series waveform as shown in FIG. 5 to estimate the wear amount, but it is preferable to acquire a plurality of time-series waveforms to estimate the wear amount as described above. In addition, at the time of acceleration/-deceleration of the vehicle on which the pneumatic tire 10 is mounted, since noise mixed into the strain signal increases, it is preferable to use a time-series waveform acquired in a state where a change in the vehicle speed is small.

The processing device 120 detects the peak value (Bo (w)) of the strain signal of the kicking out timing by using the acquired time series waveform (S 20). Specifically, the processing device 120 detects the peak $\mu\varepsilon$ of the kicking out timing based on the output (voltage) value from the strain sensor 115 corresponding to the peak of the kicking out timing strain signal.

The processing device 120 compares the detected Bo (w) with a reference value (S 30). Specifically, the processing device 120 can use, as a reference value, a peak value (Bi (n) or Bi (w)) of the strain signal at the stepping timing.

The processing device 120 estimates the wear amount of the tread portion 20 using the detected Bo (w) and any of the reference values described above (S 40).

Specifically, the processing device 120 can estimate the amount of wear of the tread portion 20 based on the difference between Bn (w) and the reference value or the ratio between Bn (w) and the reference value.

More specifically, the processing device 120 can estimate the amount of wear of the tread portion 20 based on any of the following.

·Bo (n) -Bi (n) (using the difference $\mu\varepsilon$ between stepping and kicking)

Note that in the calculation of the difference, the reduction and the minuscule may be exchanged, and in the calculation of the ratio, the numerator and the denominator may be exchanged. As shown in FIG. 3, Bi and Bo are relative values with respect to Baseline, but an absolute amount (Bi _ ABS, Bo _ ABS) of the strain signal ($\mu\varepsilon$) may be used.

Further, as described above, the processing device 120 may estimate not only the amount of wear of the tread portion 20, but also other parameters, specifically, the residual amount of groove, the wear rate of the pneumatic tire 10 relative to the new one, or the distance (or time) that can be traveled before the limit of use is reached.

When estimating the estimated travel distance (or time), the processing device 120 may acquire information such as the accumulated travel distance and time from the ECU side of the vehicle, if necessary.

The processing device 120 determines whether or not an alert is necessary based on the estimated wear amount (S 50). Specifically, the processing device 120 determines whether the wear amount (or wear rate) exceeds a threshold value. Alternatively, the processing device 120 may determine whether the residual groove amount and the travel distance (or time) described above are less than the threshold value.

If the estimated wear amount (or wear rate) exceeds a threshold value (Residual groove amount, running distance (or time) is below the threshold.), the processing device 120 outputs an alert (S 60).

Specifically, the processing device 120 may display the alert on a display device provided in the vehicle or may notify the alert by means of a voice guidance and/or an alarm sound.

### (3.3) Offset Processing of Strain Signal Values

As described above, the wear amount estimation system 100 (processing device 120) can estimate the wear amount of the tread portion 20 using a strain signal (Bo (w)) at the kicking out timing or the like, but the accuracy of estimating the wear amount may be enhanced by executing the offset processing as follows.

Before the offset processing, variation in $\mu\varepsilon$ inevitably occurs due to individual difference of the pneumatic tire 10 or the like. Therefore, if the wear amount is estimated without performing the offset processing, it is possible to estimate that the wear has progressed, but there is a limit to accurately estimating the specific wear amount (mm) and the residual groove amount (mm).

Therefore, the ratio of the strain signal when the pneumatic tire 10 is new is adjusted using the ratio of Bo (w) and the reference value as described above. For example, the value of Bo (n)/Bi (n) based on the strain signal (Bo (n)) when the pneumatic tire 10 is new is adjusted to "1".

When the difference between Bo (w) and the reference value is used while executing the offset processing, the processing device 120 can estimate the wear amount of the tread portion 20 based on the following calculation formula.

$$\{Bo(n)\text{-}Bi(n)\}\text{-}\{Bo(w)/Bi(w)\}$$

When the ratio of Bo (w) to the reference value is used while performing such calibration, the processing device 120 can estimate the wear amount of the tread portion 20 based on the following calculation formula.

$$Bo(n)/Bi(n)\text{-}Bo(w)/Bi(w)$$

### (4)Function and effects

According to the embodiment described above, the following effects are obtained. Specifically, according to the tire wear amount estimation system 100, the wear state of the tread portion 20 can be estimated based on the strain signal (Bo) output at the timing of kicking out of the ground contact area Ac of the strain sensor 115 from the road surface R and the reference value (Bi or Bo (n)) of the strain signal.

Since the strain signal shows the same tendency regardless of the traveling speed of the vehicle to which the pneumatic tire 10 is mounted, the amount of wear of the tread portion 20 can be estimated with high accuracy even when the vehicle is mainly traveling at a low speed (For example, about 40 km/h).

In other words, according to the tire wear amount estimation system 100, even if the vehicle on which the pneumatic tire 10 is mounted is mainly driven at a low speed, a high estimation accuracy of the wear amount can be achieved.

It is difficult to apply the conventional algorithm for estimating the wear state based on the time-series waveform of the acceleration as it is to the time-series waveform of the strain signal. Since the strain sensor 115 is more sensitive than the acceleration sensor, it picks up the irregularities of the road surface R, the dispersion of the peak on the tensile side at the time of grounding of the ground contact area Ac increases, and the dispersion of the wear feature amount, which is the gradient between the peak of the stepping (kicking out) timing and the peak at the time of grounding, also increases.

In the present embodiment, unlike the estimation algorithm of the wear state based on the time series waveform, a feature is found in which the peak value of the strain (Bo (w)) at the kicking out timing of inside surface of the tread portion 20 decreases with the wear progress, and the wear state of the tread portion 20 is estimated based on the feature.

The tire wear amount estimation system 100 uses a strain signal (Bi (n) or Bi (w)) at the stepping timing as a reference value of the strain signal.

Therefore, by applying an appropriate reference value according to the type or size of the pneumatic tire 10 or the like, the estimation accuracy of the wear state can be further improved.

In the present embodiment, the wear amount estimation system 100 can determine the estimated wear amount of the tread portion 20 based on the difference between the strain signal (Bo (w)) output at the timing of kicking out and the reference value (Bi (n), Bi (w)) or the ratio between Bo (w) and the reference value.

Therefore, by applying a method for determining an appropriate estimated wear amount according to the type or size of the pneumatic tire 10 or the like, the accuracy of estimating the wear state can be further enhanced. In particular, when the ratio of Bo (w) to the reference value is used, the deterioration of the estimation accuracy due to individual differences between the strain sensor 115 and the pneumatic tire 10, variations in the internal pressure, and the like can be prevented.

In this embodiment, the wear amount estimation system 100 can adjust (calibrate) the estimated wear amount of the tread portion 20 by using the ratio between the value of the strain signal (Bo (n)) when the pneumatic tire 10 is new and the reference value.

Therefore, even when the detected $\mu\varepsilon$ varies due to individual difference of the pneumatic tire 10 or the like, the specific wear amount (mm) and the residual groove amount (mm) can be estimated with high accuracy by executing such calibration.

(5) Other Embodiments

Although the contents of the present invention have been described with reference to the embodiments described above, it is obvious to those skilled in the art that the present invention is not limited to these descriptions and that various modifications and improvements are possible.

For example, in the above-described embodiment, the strain sensor 115 detects strain in the tire circumferential direction, but the strain sensor 115 detects a strain in the tire width direction or tire radial direction, and the processing device 120 may estimate the wear state of the tread portion 20 based on the detected strain.

In the above embodiment, the processing device 120 is realized on the ECU of a vehicle or on a server computer connected via a wireless communication network, but a part of the functional blocks constituting the processing device 120 may be provided on the ECU, and other functional blocks may be realized on the server computer.

The main functions of the processing device 120 may also be provided as a software program executable in a computer. In addition, the software program may be provided over a communications network or recorded on a computer readable recording medium such as an optical disk, hard disk drive, or flash memory.

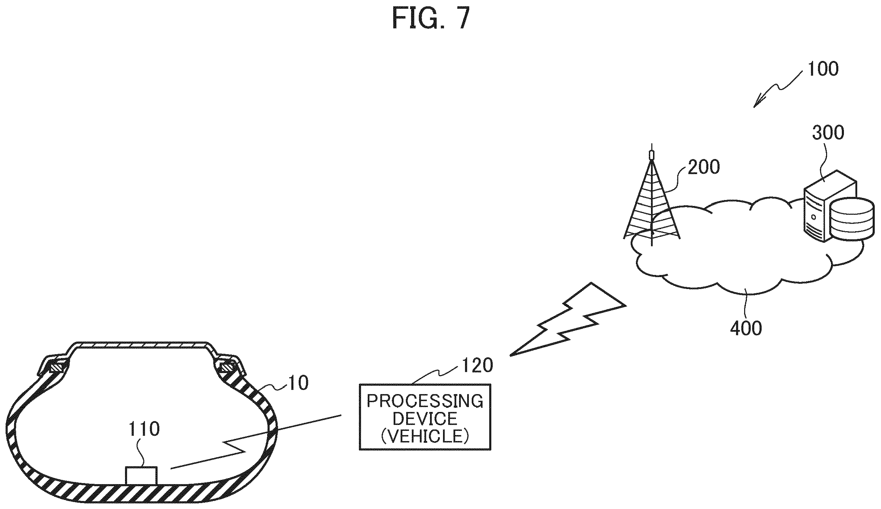

FIG. 7 is an overall schematic configuration diagram of a tire wear amount estimation system 100 related to modified example. As shown in FIG. 7, the processing device 120 (Some functions may be implemented by the ECU) mounted on a vehicle performs wireless communication with the sensor unit 110 mounted on the pneumatic tire 10, performs wireless communication with a wireless base station 200, and connects to a server computer 300 provided on a network cloud 400.

When the data of the time-series waveform of the strain signal shown in FIG. 3 or the like is transmitted from the sensor unit 110 to the processing device 120, the amount of data may be large and the battery 119 (see FIG. 2) may be consumed quickly. Therefore, in such a case, the sensor unit 110 may extract the feature amount of the strain signal, specifically, Bo and Bi ($\mu\varepsilon$), and transmit only the extracted Bo and Bi to the processing device 120 instead of the data of the time series waveform.

On the other hand, if the operating conditions such as the battery 119 are satisfied, the functions of the processing device 120 described in the above-described embodiment may be mounted in the sensor unit 110.

As noted above, although embodiments of the present invention have been described, it should not be understood that the arguments and drawings forming part of this disclosure are intended to limit the present invention.

[Explanation of Reference Numerals]

    10 pneumatic tire
    20 tread portion
    30 tire side portion
    90 rim wheel
    100 tire wear amount estimation system
    110 sensor unit

111 internal pressure sensor
113 temperature sensor
115 strain sensor
117 communication unit
119 battery
120 processing device
121 communication unit
123 signal acquisition unit
125 wear estimation unit
127 output unit
200 wireless base station
300 server computers
400 network cloud
R road surface
Ac ground contact area

**Claims**

1. A tire wear amount estimation system (100) comprising:

   a strain signal acquisition unit (123) that acquires a strain signal output from a strain sensor (115) provided on an inner surface or inside of a tire (10); and
   a wear estimation unit (125) that estimates a wear state of a tread portion (20) by comparing the strain signal output (Bo(w)) at a timing of kicking out from a road surface (R) of the ground contact area (Ac) of the tread portion corresponding to the strain sensor with a reference value of the strain signal,
   wherein the wear estimation unit uses, as the reference value, the strain signal output (Bi(n), Bi(w)) at a timing of stepping on the road surface of the ground contact area.

2. The tire wear amount estimation system (100) according to claim 1, wherein the wear estimation unit (125) determines an estimated wear amount of the tread portion (20) based on a difference between a value of the strain signal output at the timing of kicking out (Bo(w)) and the reference value (Bi(n), Bi(w)).

3. The tire wear amount estimation system (100) according to claim 1, wherein the wear estimation unit (125) determines an estimated wear amount of the tread portion (20) based on a ratio between a value of the strain signal output at the timing of kicking out (Bo(w)) and the reference value (Bi(n), Bi(w)).

4. The tire wear amount estimation system (100) according to claim 2 or 3, wherein the wear estimation unit (125) adjusts the estimated wear amount by using a ratio between the value of the strain signal output at the timing of kicking out when the tire is new (Bo(n)) and the reference value (Bi(n), Bi(w)).

5. A tire wear amount estimation program for causing a computer to execute a program comprising the processes of:

   a strain signal acquisition process for acquiring a strain signal output from a strain sensor (115) provided on an inner surface or inside of a tire (10); and
   a wear estimation process for estimating a wear state of a tread portion (20) by comparing the strain signal output (Bo(w)) at a timing of kicking out from a road surface (R) of the ground contact area (Ac) of the tread portion corresponding to the strain sensor with a reference value of the strain signal,
   wherein the reference value is the strain signal output (Bi(n), Bi(w)) at a timing of stepping on the road surface of the ground contact area.

6. A tire wear amount estimation method comprising the steps of:

   acquiring a strain signal output from a strain sensor (115) provided on an inner surface or inside of a tire (10); and
   estimating a wear state of a tread portion (20) by comparing the strain signal output (Bo(w)) at a timing of kicking out from a road surface (R) of the ground contact area (Ac) of the tread portion (20) corresponding to the strain sensor with a reference value of the strain signal,
   wherein the reference value is the strain signal output (Bi(n), Bi(w)) at a timing of stepping on the road surface of the ground contact area.

**Patentansprüche**

1. System zur Schätzung des Reifenverschleißausmaßes (100), das Folgendes umfasst:

   eine Dehnungssignal-Erfassungseinheit (123), die ein Dehnungssignal erfasst, das von einem Dehnungssensor (115) ausgegeben wird, der auf einer Innenfläche eines Reifens (10) oder darin bereitgestellt wird, und
   eine Verschleißschätzungseinheit (125), die einen Verschleißzustand eines Laufflächenabschnitts (20) durch Vergleichen der Dehnungssignalausgabe (Bo(w)) zu einem Zeitpunkt des letzten Ablösens der Bodenberührungsfläche (Ac) des Laufflächenabschnitts, der dem Dehnungssensor entspricht, von einer Straßenoberfläche (R) mit einem Referenzwert des Dehnungssignals schätzt,
   wobei die Verschleißschätzungseinheit, als den Referenzwert, die Dehnungssignalausgabe (Bi(n), Bi(w)) zu einem Zeitpunkt des ersten Auftreffens der Bodenberührungsfläche auf der Straßenoberfläche verwendet.

2. System zur Schätzung des Reifenverschleißausmaßes (100) nach Anspruch 1, wobei die Verschleißschätzungseinheit (125) ein geschätztes Verschleißausmaß des Laufflächenabschnitts (20) auf Grundlage einer Differenz zwischen einem Wert des Dehnungssignals, das zum Zeitpunkt des letzten Ablösens (Bo(w)) ausgegeben wird, und dem Referenzwert (Bi(n), Bi(w)) bestimmt.

3. System zur Schätzung des Reifenverschleißausmaßes (100) nach Anspruch 1, wobei die Verschleißschätzungseinheit (125) ein geschätztes Verschleißausmaß des Laufflächenabschnitts (20) auf Grundlage eines Verhältnisses zwischen einem Wert des Dehnungssignals, das zum Zeitpunkt des letzten Ablösens (Bo(w)) ausgegeben wird, und dem Referenzwert (Bi(n), Bi(w)) bestimmt.

4. System zur Schätzung des Reifenverschleißausmaßes (100) nach Anspruch 2 oder 3, wobei die Verschleißschätzungseinheit (125) das geschätzte Verschleißausmaß durch Verwenden eines Verhältnisses zwischen dem Wert des Dehnungssignals, das zum Zeitpunkt des letzten Ablösens ausgegeben wird, wenn der Reifen neu ist, (Bo(n)) und dem Referenzwert (Bi(n), Bi(w)) anpasst.

5. Programm zur Schätzung des Reifenverschleißausmaßes, um zu veranlassen, dass ein Rechner ein Programm ausführt, das die folgenden Prozesse umfasst:

einen Dehnungssignal-Erfassungsprozess zum Erfassen eines Dehnungssignals, das von einem Dehnungssensor (115) ausgegeben wird, der auf einer Innenfläche eines Reifens (10) oder darin bereitgestellt wird, und einen Verschleißschätzungsprozess zum Schätzen eines Verschleißzustandes eines Laufflächenabschnitts (20) durch Vergleichen der Dehnungssignalausgabe (Bo(w)) zu einem Zeitpunkt des letzten Ablösens der Bodenberührungsfläche (Ac) des Laufflächenabschnitts, der dem Dehnungssensor entspricht, von einer Straßenoberfläche (R) mit einem Referenzwert des Dehnungssignals, wobei der Referenzwert die Dehnungssignalausgabe (Bi(n), Bi(w)) zu einem Zeitpunkt des ersten Auftreffens der Bodenberührungsfläche auf der Straßenoberfläche ist.

6. Verfahren zur Schätzung des Reifenverschleißausmaßes, das die folgenden Schritte umfasst:

Erfassen eines Dehnungssignals, das von einem Dehnungssensor (115) ausgegeben wird, der auf einer Innenfläche eines Reifens (10) oder darin bereitgestellt wird, und Schätzen eines Verschleißzustandes eines Laufflächenabschnitts (20) durch Vergleichen der Dehnungssignalausgabe (Bo(w)) zu einem Zeitpunkt des letzten Ablösens der Bodenberührungsfläche (Ac) des Laufflächenabschnitts, der dem Dehnungssensor entspricht, von einer Straßenoberfläche (R) mit einem Referenzwert des Dehnungssignals, wobei der Referenzwert die Dehnungssignalausgabe (Bi(n), Bi(w)) zu einem Zeitpunkt des ersten Auftreffens der Bodenberührungsfläche auf der Straßenoberfläche ist.

**Revendications**

1. Système d'estimation de quantité d'usure de pneu (100) comprenant :

une unité d'acquisition de signal de déformation (123) qui acquiert un signal de déformation émis en sortie par un capteur de déformation (115) prévu sur une surface interne d'un pneu (10) ou à l'intérieur de celui-ci, et une unité d'estimation d'usure (125) qui estime un état d'usure d'une partie de bande de roulement (20) en comparant la sortie de signal de déformation (Bo(w)) à un instant de dernier dégagement depuis une surface de route (R) de la région en contact avec le sol (Ac) de la partie de bande de roulement correspondant au capteur de déformation avec une valeur de référence du signal de déformation, dans lequel l'unité d'estimation d'usure utilise, à titre de valeur de référence, la sortie de signal de déformation (Bi(b), Bi(w)) à un instant d'entrée en contact avec la surface de route de la région en contact avec le sol.

2. Système d'estimation de quantité d'usure de pneu (100) selon la revendication 1, dans lequel l'unité d'estimation d'usure (125) détermine une quantité d'usure estimée de la partie de bande de roulement (20) sur la base d'une différence entre une valeur du signal de déformation émis en sortie à l'instant de dernier dégagement (Bo(w)) et la valeur de référence (Bi(n), Bi(w)).

3. Système d'estimation de quantité d'usure de pneu (100) selon la revendication 1, dans lequel l'unité d'estimation d'usure (125) détermine une quantité d'usure estimée de la partie de bande de roulement (20) sur la base d'un rapport entre une valeur du signal de déformation émis en sortie à l'instant du dernier dégagement (Bo(w)) et la valeur de référence (Bi(n), Bi(w)).

4. Système d'estimation de quantité d'usure de pneu (100) selon la revendication 2 ou 3, dans lequel l'unité d'estimation d'usure (125) ajuste la quantité d'usure estimée en utilisant un rapport entre la valeur du signal de déformation émis à l'instant du dernier dégagement lorsque le pneu est neuf (Bo(n)) et la valeur de référence (Bi(n), Bi(w)).

5. Programme d'estimation de quantité d'usure de pneu pour amener un ordinateur à exécuter un programme comprenant les processus suivants :

un processus d'acquisition de signal de déformation pour acquérir un signal de déformation émis en sortie par un capteur de déformation (115) prévu sur une surface intérieure d'un pneu (10) ou à l'intérieur de celui-ci, et
un processus d'estimation d'usure pour estimer un état d'usure d'une partie de bande de roulement (20) par une comparaison de la sortie de signal de déformation (Bo(w)) à un instant du dernier dégagement d'une surface de route (R) de la région en contact avec le sol (Ac) de la partie de bande de roulement correspondant au capteur de déformation avec une valeur de référence du signal de déformation,
dans lequel la valeur de référence est la sortie de signal de déformation (Bi(n), Bi(w)) à un instant d'entrée en contact avec la surface de route de la région en contact avec le sol.

6. Procédé d'estimation de quantité d'usure de pneu comprenant les étapes suivantes :

acquisition d'un signal de déformation émis en sortie par un capteur de déformation (115) prévu sur une surface intérieure d'un pneu (10) ou à l'intérieur de celui-ci, et
estimation d'un état d'usure d'une partie de bande de roulement (20) par une comparaison de la sortie de signal de déformation (Bo(w)) à un instant de dernier dégagement d'une surface de route (R) de la région en contact avec le sol (Ac) de la partie de bande de roulement (20) correspondant au capteur de déformation avec une valeur de référence du signal de déformation,
dans lequel la valeur de référence est la sortie de signal de déformation (Bi(n), Bi(w)) à un instant d'entrée en contact avec la surface de route de la région en contact avec le sol.

# FIG. 1

# FIG. 2

# FIG. 3

EP 4 049 864 B1

FIG. 4

FIG. 5

# FIG. 6

```
        ┌──────────────┐
        │    START     │
        └──────┬───────┘
               │            ⌇ S10
        ┌──────▼──────────────────────┐
        │ ACQUIRE A TIME SERIES WAVEFORM│
        │     OF STRAIN SIGNAL         │
        └──────┬──────────────────────┘
               │            ⌇ S20
        ┌──────▼──────────────────────┐
        │ DETECT THE PEAK VALUE OF STRAIN│
        │ SIGNAL OF THE KICKING-OUT SIDE │
        └──────┬──────────────────────┘
               │            ⌇ S30
        ┌──────▼──────────────────────┐
        │ COMPARE WITH REFERENCE VALUE │
        └──────┬──────────────────────┘
               │            ⌇ S40
        ┌──────▼──────────────────────┐
        │   ESTIMATE  WEAR  AMOUNT     │
        └──────┬──────────────────────┘
               │            ⌇ S50
             ◇ ALERT IS NECESSARY? ◇──── NO
               │ YES
               │            ⌇ S60
        ┌──────▼──────────────────────┐
        │       OUTPUT ALERT           │
        └──────┬──────────────────────┘
               │◄────────────────────
        ┌──────▼───────┐
        │     END      │
        └──────────────┘
```

# FIG. 7

EP 4 049 864 B1

100

300

200

PROCESSING
DEVICE
(VEHICLE)

120

10

110

400

**EP 4 049 864 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010186492 A1
- JP 2009061917 A
- JP 2009019950 A
- US 5749984 A
- JP 2007153034 B
- JP 2016190615 A